# EUROPEAN PATENT APPLICATION

(11) **EP 4 485 454 A1**
(43) Date of publication of application: **01.01.2025**
(21) Application number: 23791097.1
(22) Date of filing: 12.04.2023
(51) Int. Cl.: G10L 15/22, G10L 17/14, G10L 17/18

(54) **METHOD FOR WAKING UP DEVICE, ELECTRONIC DEVICE, AND STORAGE MEDIUM**

(30) Priority: 18.04.2022 CN 202210403454
(71) Applicant: Huawei Technologies Co., Ltd., Shenzhen, Guangdong 518129 (CN)
(72) Inventor: FANG, Ce, Shenzhen, Guangdong 518129 (CN); GUO, Feng, Shenzhen, Guangdong 518129 (CN); QIN, Yaojun, Shenzhen, Guangdong 518129 (CN); CHEN, Yidan, Shenzhen, Guangdong 518129 (CN); ZHANG, Shi, Shenzhen, Guangdong 518129 (CN)
(74) Representative: Gill Jennings & Every LLP
(86) International application number: PCT/CN2023/087805
(87) International publication number: WO 2023/202442

(57) **Abstract**

Embodiments of this application relate to the field of terminal technologies, and provide a method for waking up a device, an electronic device, and a storage medium. The method for waking up a device includes: when it is determined that a received audio signal includes a wakeup word, performing machine sound recognition and/or voiceprint recognition on the audio signal to obtain a recognition result, where the recognition result indicates to wake up an electronic device or not to wake up an electronic device, or indicates that whether to wake up an electronic device is not determined; and if the recognition result indicates that whether to wake up the electronic device is not determined, outputting prompt information to a user, where the prompt information is used to guide the user to wake up the electronic device. When whether to wake up the electronic device is not determined, the prompt information is output to the user for human-computer interaction with the user. In this way, the user can further determine whether to wake up the electronic device, to improve an accuracy rate of waking up the electronic device.

## Description

This application claims priority to Chinese Patent Application No. 202210403454.8, filed with the China National Intellectual Property Administration on April 18, 2022 and entitled "METHOD FOR WAKING UP DEVICE, ELECTRONIC DEVICE, AND STORAGE MEDIUM", which is incorporated herein by reference in its entirety.

### TECHNICAL FIELD

Embodiments of this application relate to the field of terminal technologies, and in particular, to a method for waking up a device, an electronic device, and a storage medium.

### BACKGROUND

With development of electronic technologies and terminal technologies, electronic devices have more types, more powerful functions, and better human-computer interaction effects. Many electronic devices may enter a hibernated state when not working, and may enter a working state when being woken up by a user.

Usually, the user says a wakeup word to wake up the electronic device. Correspondingly, the electronic device receives an audio signal that is input by the user, and the device may be woken up after parsing the wakeup word.

However, due to a factor like machine sound interference or environmental noise interference, the electronic device may be mistakenly woken up or cannot be successfully woken up. This lowers an accuracy rate of waking up the electronic device.

### SUMMARY

Embodiments of this application provide a method for waking up a device, an electronic device, and a storage medium, to improve an accuracy rate of waking up the electronic device.

According to a first aspect, a method for waking up a device is provided, including: when it is determined that a received audio signal includes a wakeup word, performing machine sound recognition and/or voiceprint recognition on the audio signal to obtain a recognition result, where the recognition result indicates to wake up an electronic device or not to wake up an electronic device, or indicates that whether to wake up an electronic device is not determined; and if the recognition result indicates that whether to wake up the electronic device is not determined, outputting prompt information to a user, where the prompt information is used to guide the user to wake up the electronic device.

According to the method for waking up a device provided in the first aspect, machine sound recognition and/or voiceprint recognition are/is performed on the audio signal. This improves accuracy of determining a user identity and avoids mistaken wakeup of the device. In addition, when whether to wake up the electronic device is not determined, the prompt information is output to the user for human-computer interaction with the user. In this way, the user further determines whether to wake up the electronic device. This avoids a case in which the electronic device is mistakenly woken up or cannot be successfully woken up, and improves an accuracy rate of waking up the electronic device.

In a possible implementation, the prompt information is used to guide the user to perform voice interaction with the electronic device, to determine whether to wake up the electronic device; the prompt information is used to guide the user to perform a preset action in a photographing range of a photographing device on a target device, to determine whether to wake up the electronic device; the prompt information is used to guide the user to perform an operation in a target interface displayed by a target device, to determine whether to wake up the electronic device; or the prompt information is used to guide the user to perform an operation on a target physical button on a target device, to determine whether to wake up the electronic device.

In this implementation, interaction between the electronic device and the user may be performed in a plurality of forms. This improves flexibility of further determining, by the user, whether to wake up the electronic device.

In a possible implementation, the target device is the electronic device or a first device that communicates with the electronic device.

It can be learned that human-computer interaction with the user can be completed by using the electronic device to determine whether to wake up the electronic device, or human-computer interaction with the user can be completed by using the first device to determine whether to wake up the electronic device. A human-computer interaction mode is more flexible.

In a possible implementation, a user account of the electronic device is the same as that of the first device.

In this implementation, the user account of the electronic device is the same as that of the first device, and the electronic device is more likely to discover the first device. In this way, interaction with the user can be completed by using the first device to further determine whether to wake up the electronic device.

In a possible implementation, the outputting prompt information to a user includes: outputting voice prompt information to the user; or displaying a target interface to the user, where the target interface includes the prompt information.

In this implementation, the electronic device directly outputs the prompt information, and the electronic device can implement interaction with the user by using the first device.

In a possible implementation, the outputting prompt information to a user includes: transmitting indication information to a first device, where the indication information indicates the first device to output the prompt information to the user.

In this implementation, the first device outputs the prompt information, and interaction with the user can be implemented by using the first device.

In a possible implementation, the first device includes a mobile phone and/or a watch.

In a possible implementation, the performing machine sound recognition and/or voiceprint recognition on the audio signal to obtain a recognition result includes: performing machine sound recognition and voiceprint recognition on the audio signal. If it is determined that the audio signal is a machine sound, the recognition result indicates not to wake up the electronic device. If it is determined that the audio signal is not a machine sound, and voiceprint recognition succeeds, the recognition result indicates to wake up the electronic device. If it is determined that the audio signal is not a machine sound, and voiceprint recognition fails, the recognition result indicates that whether to wake up the electronic device is not determined.

In this implementation, machine sound recognition and voiceprint recognition are performed on the audio signal. This improves the accuracy of determining the user identity. The recognition result indicates three results: The electronic device is to be woken up; the electronic device is not to be woken up; or whether to wake up the electronic device is not determined. A determining result that whether to wake up the electronic device is not determined is added. In this way, whether to wake up the electronic device can be further determined subsequently, to improve the accuracy rate of waking up the electronic device.

In a possible implementation, the performing machine sound recognition and voiceprint recognition on the audio signal includes: performing machine sound recognition on the audio signal; and if it is determined that the audio signal is not a machine sound, performing voiceprint recognition on the audio signal.

In this implementation, machine sound recognition is performed first. If it is determined that the audio signal is not a machine sound, voiceprint recognition is performed. This improves processing efficiency.

In a possible implementation, the performing machine sound recognition and voiceprint recognition on the audio signal includes: inputting the audio signal to a voiceprint identification model to obtain a first result and voiceprint feature information of the audio signal, where the first result indicates whether the audio signal is a machine sound; and if the first result indicates that the audio signal is not a machine sound, performing voiceprint recognition on the audio signal based on the voiceprint feature information of the audio signal and a voiceprint template library.

In this implementation, machine sound recognition and voiceprint recognition are implemented by using the voiceprint identification model, and coupling between machine sound recognition and voiceprint recognition is implemented through parameter sharing of a neural network model.

In a possible implementation, the performing machine sound recognition and/or voiceprint recognition on the audio signal to obtain a recognition result includes: performing machine sound recognition on the audio signal. If it is determined that the audio signal is a machine sound, the recognition result indicates not to wake up the electronic device. If it is determined that the audio signal is not a machine sound, the recognition result indicates to wake up the electronic device. If it is not determined whether the audio signal is a machine sound, the recognition result indicates that whether to wake up the electronic device is not determined.

In this implementation, machine sound recognition is performed on the audio signal, to determine whether to wake up the electronic device.

In a possible implementation, the performing machine sound recognition and/or voiceprint recognition on the audio signal to obtain a recognition result includes: performing voiceprint recognition on the audio signal; and if it is determined that voiceprint recognition succeeds, the recognition result indicates to wake up the electronic device; or if it is determined that voiceprint recognition fails, the recognition result indicates that whether to wake up the electronic device is not determined.

In this implementation, voiceprint recognition is performed on the audio signal, to determine whether to wake up the electronic device.

In a possible implementation, the method further includes: obtaining response information that is input by the user based on the prompt information; and determining, based on the response information, whether to wake up the electronic device.

In a possible implementation, the prompt information is used to guide the user to perform the preset action in the photographing range of the photographing device on the target device. Before the obtaining response information that is input by the user based on the prompt information, the method further includes: starting the photographing device on the electronic device.

In a possible implementation, the electronic device stores the voiceprint template library. The method further includes: if it is determined, based on the response information, to wake up the electronic device, updating the voiceprint template library based on the audio signal.

In this implementation, if the electronic device determines, through interaction with the user and based on the response information that is input by the user, to wake up the electronic device, it indicates that the audio signal can wake up the electronic device. Therefore, the voiceprint template library is updated based on the audio signal. This increases a success probability of subsequent voiceprint recognition and improves the accuracy rate of waking up the electronic device.

According to a second aspect, an apparatus for waking up a device is provided, including: an identification module, configured to: when it is determined that a received audio signal includes a wakeup word, perform machine sound recognition and/or voiceprint recognition on the audio signal to obtain a recognition result, where the recognition result indicates to wake up an electronic device or not to wake up an electronic device, or indicates that whether to wake up an electronic device is not determined; and an output module, configured to: if the recognition result indicates that whether to wake up the electronic device is not determined, output prompt information to a user, where the prompt information is used to guide the user to wake up the electronic device.

In a possible implementation, the prompt information is used to guide the user to perform voice interaction with the electronic device, to determine whether to wake up the electronic device; the prompt information is used to guide the user to perform a preset action in a photographing range of a photographing device on a target device, to determine whether to wake up the electronic device; the prompt information is used to guide the user to perform an operation in a target interface displayed by a target device, to determine whether to wake up the electronic device; or the prompt information is used to guide the user to perform an operation on a target physical button on a target device, to determine whether to wake up the electronic device.

In a possible implementation, the target device is the electronic device or a first device that communicates with the electronic device.

In a possible implementation, a user account of the electronic device is the same as that of the first device.

In a possible implementation, the output module is configured to output voice prompt information to the user or display a target interface to the user, where the target interface includes the prompt information.

In a possible implementation, the apparatus further includes a transmission module, configured to transmit indication information to a first device, where the indication information indicates the first device to output the prompt information to the user.

In a possible implementation, the first device includes a mobile phone and/or a watch.

In a possible implementation, the identification module is configured to perform machine sound recognition and voiceprint recognition on the audio signal. If it is determined that the audio signal is a machine sound, the recognition result indicates not to wake up the electronic device. If it is determined that the audio signal is not a machine sound, and voiceprint recognition succeeds, the recognition result indicates to wake up the electronic device. If it is determined that the audio signal is not a machine sound, and voiceprint recognition fails, the recognition result indicates that whether to wake up the electronic device is not determined.

In a possible implementation, the identification module is configured to: perform machine sound recognition on the audio signal; and if it is determined that the audio signal is not a machine sound, perform voiceprint recognition on the audio signal.

In a possible implementation, the identification module is configured to: input the audio signal to a voiceprint identification model to obtain a first result and voiceprint feature information of the audio signal, where the first result indicates whether the audio signal is a machine sound; and if the first result indicates that the audio signal is not a machine sound, perform voiceprint recognition on the audio signal based on the voiceprint feature information of the audio signal and a voiceprint template library.

In a possible implementation, the identification module is configured to perform machine sound recognition on the audio signal. If it is determined that the audio signal is a machine sound, the recognition result indicates not to wake up the electronic device. If it is determined that the audio signal is not a machine sound, the recognition result indicates to wake up the electronic device. If it is not determined whether the audio signal is a machine sound, the recognition result indicates that whether to wake up the electronic device is not determined.

In a possible implementation, the identification module is configured to perform voiceprint recognition on the audio signal. If it is determined that voiceprint recognition succeeds, the recognition result indicates to wake up the electronic device. If it is determined that voiceprint recognition fails, the recognition result indicates that whether to wake up the electronic device is not determined.

In a possible implementation, the apparatus further includes a determining module. The determining module is configured to: obtain response information that is input by the user based on the prompt information; and determine, based on the response information, whether to wake up the electronic device.

In a possible implementation, the prompt information is used to guide the user to perform the preset action in the photographing range of the photographing device on the target device. The determining module is further configured to: before obtaining response information that is input by the user based on the prompt information, start the photographing device on the electronic device.

In a possible implementation, the electronic device stores the voiceprint template library, and the apparatus further includes an update module. The update module is configured to: if it is determined, based on the response information, to wake up the electronic device, update the voiceprint template library based on the audio signal.

In a possible implementation, the apparatus further includes a wakeup word module. The wakeup word module is configured to: obtain the audio signal, and determine whether the audio signal includes the wakeup word.

According to a third aspect, an electronic device is provided, including a processor. The processor is configured to: be coupled to a memory, read instructions in the memory, and enable, according to the instructions, the electronic device to perform the method provided in the first aspect.

According to a fourth aspect, a program is provided. When the program is executed by a processor, the program is used to perform the method provided in the first aspect.

According to a fifth aspect, a computer-readable storage medium is provided. The computer-readable storage medium stores instructions. When the instructions are run on a computer or a processor, the method provided in the first aspect is implemented.

According to a sixth aspect, a program product is provided. The program product includes a computer program. The computer program is stored in a readable storage medium. At least one processor of a device may read the computer program from the readable storage medium. The at least one processor executes the computer program, to enable the device to implement the method provided in the first aspect.

### BRIEF DESCRIPTION OF DRAWINGS

FIG. 1A to FIG. 1D are a group of diagrams of scenarios of waking up an electronic device according to an embodiment of this application;
FIG. 2 is a diagram of a structure of an electronic device according to an embodiment of this application;
FIG. 3 is a diagram of another structure of an electronic device according to an embodiment of this application;
FIG. 4 is a flowchart of a method for waking up a device according to an embodiment of this application;
FIG. 5 is a diagram of a structure of a voiceprint identification model according to an embodiment of this application;
FIG. 6A to FIG. 6G are a group of diagrams of application scenarios of outputting prompt information according to an embodiment of this application;
FIG. 7 is a diagram of a structure of an apparatus for waking up a device according to an embodiment of this application; and
FIG. 8 is a diagram of another structure of an electronic device according to an embodiment of this application.

### DESCRIPTION OF EMBODIMENTS

The following describes embodiments of this application with reference to the accompanying drawings.

A method for waking up a device provided in embodiments of this application is applicable to a scenario in which an electronic device is woken up by a user. A name and a type of the electronic device are not limited in embodiments of this application. For example, the electronic device may also be referred to as an internet of things (internet of things, IOT) device, a terminal, a mobile terminal, a terminal device, a smart device, or user equipment. Currently, examples of some electronic devices are smart speakers, smart appliances, mobile phones, and the like.

For ease of description, in embodiments of this application, for example, the electronic device is a speaker.

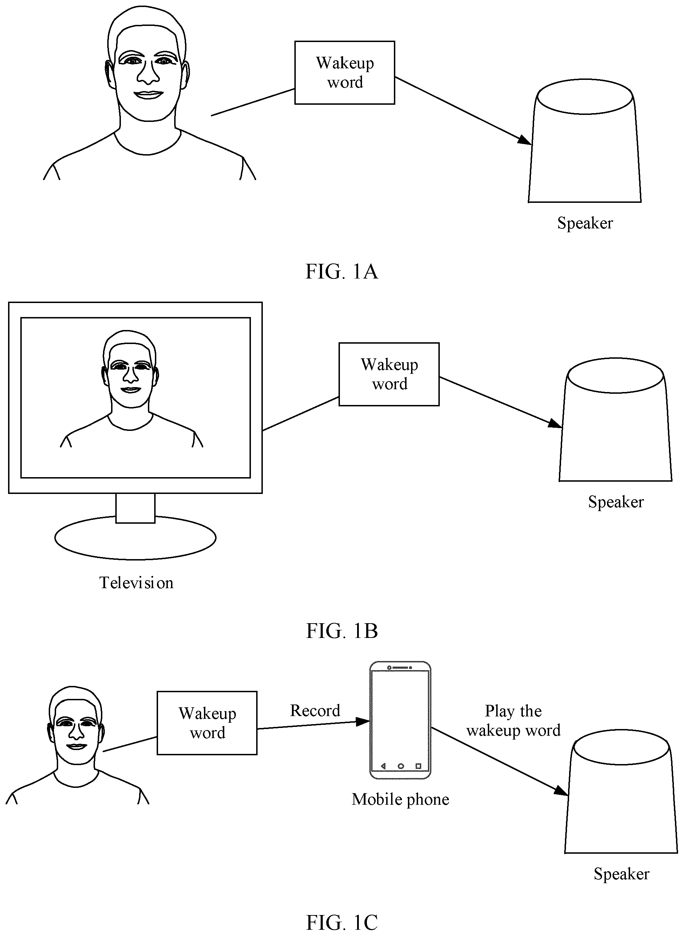

For example, FIG. 1A to FIG. 1D are a group of diagrams of scenarios of waking up the electronic device according to an embodiment of this application. However, FIG. 1A to FIG. 1D do not constitute a limitation on the application scenarios.

In an example, as shown in FIG. 1A, a user may say a wakeup word of the speaker, to wake up the speaker. Correspondingly, the speaker receives an audio signal that is input by the user, and parses the audio signal. After the wakeup word is parsed out, the speaker may be woken up. The wakeup word is preset information used to wake up the electronic device. A name and specific content of the wakeup word are not limited in embodiments of this application. For example, the wakeup word may also be referred to as a keyword.

In another example, as shown in FIG. 1B, a television is playing a program, and a character in an image says a wakeup word or a statement with a wakeup word. The speaker receives an audio signal, and parses the audio signal. In this scenario, no user wants to wake up the speaker. However, after receiving the audio signal, the speaker may parse out the wakeup word. This causes mistaken wakeup of the speaker.

In still another example, as shown in FIG. 1C, a mobile phone records a wakeup word said by the user. Subsequently, the mobile phone plays a recording of the user near the speaker. Correspondingly, the speaker receives an audio signal, and parses the audio signal. In this scenario, the user does not wake up the speaker. However, after receiving the audio signal, the speaker parses out the wakeup word. This may cause mistaken wakeup of the speaker.

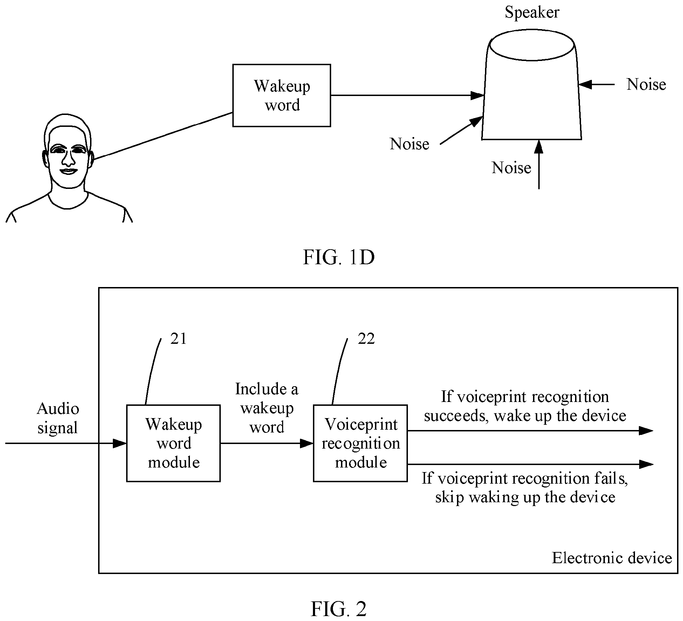

In still another example, as shown in FIG. 1D, noise in an environment in which the speaker is located is loud, and the user is far away from the speaker. The user may say a wakeup word of the speaker, to wake up the speaker. Correspondingly, the speaker receives an audio signal, and parses the audio signal. In this scenario, the noise in the environment interferes with a voice of the user. This may cause a failure to wake up a speaker.

In a related technology, the electronic device may perform voiceprint recognition on an input audio signal, to prevent a device from being mistakenly woken up. A voiceprint is a sound wave spectrum that carries speech information and has specificity and stability. Voiceprint recognition is a kind of biometric recognition technology, which can be used to determine an identity of a talker by a voice. In an implementation, as shown in FIG. 2, the electronic device may include a wakeup word module 21 and a voiceprint recognition module 22.

A method for waking up a device may include:
the wakeup word module 21, configured to: obtain an audio signal, and determine whether the audio signal includes a wakeup word, where if the audio signal includes the wakeup word, the electronic device is controlled to enter a wakeup and activated state, and voiceprint feature information of the audio signal is obtained; and
the voiceprint recognition module 22, configured to perform voiceprint recognition on the audio signal based on the voiceprint feature information of the audio signal, where if voiceprint recognition succeeds, the device is woken up, or if voiceprint recognition fails, the device is not woken up.

An implementation of performing voiceprint recognition by the electronic device is not limited in embodiments of this application, and an existing voiceprint recognition technology may be used. Optionally, an implementation is: establishing and storing a voiceprint template library, where the voiceprint template library includes at least one piece of voiceprint template information; matching voiceprint feature information of an audio signal with the at least one piece of voiceprint template information to obtain at least one matching value; comparing a target matching value with a preset matching value, where the target matching value is a largest value in the at least one matching value; and if the target matching value is greater than the preset matching value, determining that voiceprint recognition succeeds, or if the target matching value is less than the preset matching value, determining that voiceprint recognition fails. When the target matching value is equal to the preset matching value, it may be determined that voiceprint recognition succeeds, or it may be determined that voiceprint recognition fails. Usually, the user needs to register voiceprint information with the electronic device in advance, to ensure that voiceprint recognition can be successful. Optionally, another implementation is: performing voiceprint recognition on an audio signal by using a pre-trained voiceprint recognition model.

In an implementation shown in FIG. 2, voiceprint recognition is performed on an audio signal. This improves accuracy of determining a user identity, and avoids mistaken wakeup of a device in some scenarios. For example, in the scenario shown in FIG. 1B, the speaker performs voiceprint recognition on the audio signal played by the television. Voiceprint recognition fails, and the speaker is not woken up. However, in some scenarios, the electronic device may still be mistakenly woken up or cannot be woken up. For example, in the scenario shown in FIG. 1C, if the mobile phone is used to play the recording in which the user says the wakeup word, to register with the speaker, the voiceprint template library includes voiceprint template information corresponding to the recording. Subsequently, when the mobile phone plays the recording in which the user says the wakeup word, the speaker performs voiceprint recognition on the audio signal played by the mobile phone. Voiceprint recognition succeeds. As a result, the speaker is mistakenly woken up. For another example, in the scenario shown in FIG. 1D, the noise in the environment interferes with the voice of the user, and the speaker performs voiceprint recognition on the audio signal that is input by the user. Voiceprint recognition may fail. As a result, the speaker cannot be successfully woken up.

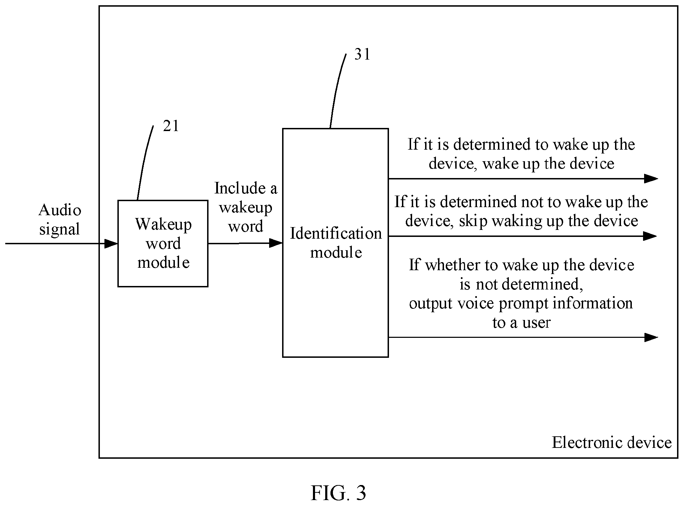

An embodiment of this application provides a method for waking up a device. As shown in FIG. 3, an electronic device may include a wakeup word module 21 and an identification module 31. For the wakeup word module 21, refer to the descriptions of FIG. 2. Details are not described herein again. The identification module 31 is configured to perform machine sound recognition and/or voiceprint recognition on an audio signal to obtain a recognition result. The recognition result indicates to wake up the electronic device or not to wake up the electronic device, or indicates that whether to wake up the electronic device is not determined. If the recognition result indicates to wake up the electronic device, the electronic device is woken up. If the recognition result indicates not to wake up the electronic device, the electronic device is not woken up. If the recognition result indicates that whether to wake up the electronic device is not determined, prompt information is output to the user, so that the user further determines whether to wake up the electronic device.

According to the method for waking up a device provided in embodiments of this application, machine sound recognition and/or voiceprint recognition are/is performed on the audio signal. This improves accuracy of determining a user identity and avoids mistaken wakeup of the device. In addition, when whether to wake up the electronic device is not determined, the prompt information is output to the user for human-computer interaction with the user. In this way, the user further determines whether to wake up the electronic device. This avoids a case in which the electronic device is mistakenly woken up or cannot be successfully woken up, and improves an accuracy rate of waking up the electronic device.

The following describes in detail technical solutions of this application by using specific embodiments. The following embodiments may be combined with each other, and same or similar concepts or processes may not be repeatedly described in some embodiments.

Terms "first", "second", "third", "fourth", and the like (if any) in embodiments of this application are used to distinguish between similar objects, but not necessarily describe a specific order or sequence.

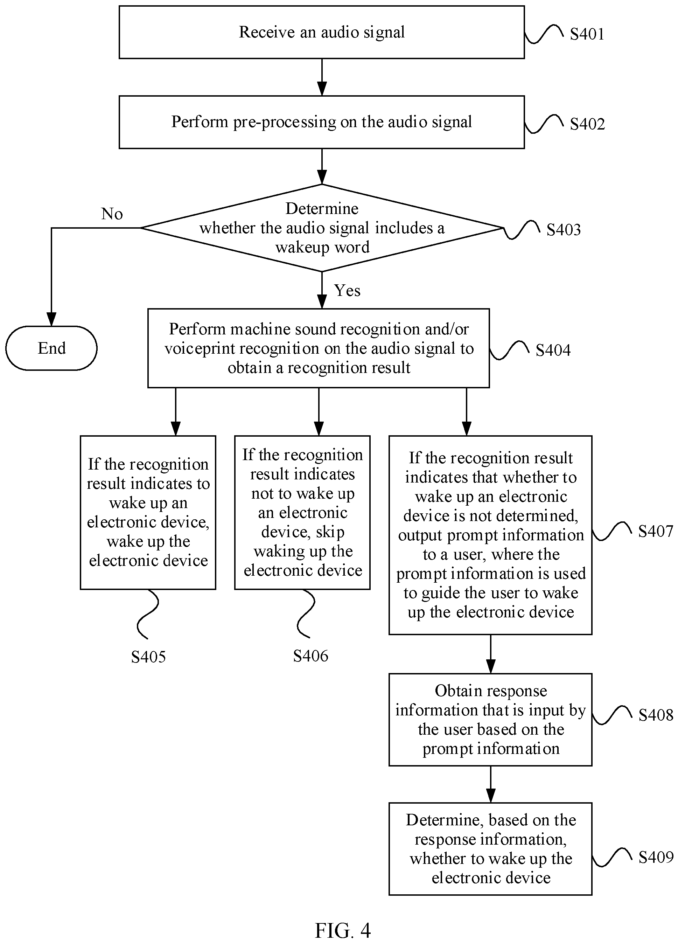

FIG. 4 is a flowchart of a method for waking up a device according to an embodiment of this application. The method for waking up a device provided in this embodiment may be performed by an electronic device. As shown in FIG. 4, the method for waking up a device provided in this embodiment may include the following steps.

S401: Receive an audio signal.

S402: Perform pre-processing on the audio signal.

Optionally, pre-processing may include but is not limited to at least one of the following: noise reduction processing, filtering processing, dereverberation processing, parametric equalization adjustment processing, volume adjustment processing, or gain processing.

S403: Determine whether the audio signal includes a wakeup word.

If the audio signal includes the wakeup word, the electronic device is controlled to enter a wakeup and activated state, and S404 is subsequently performed.

If the audio signal does not include the wakeup word, processing ends.

S404: Perform machine sound recognition and/or voiceprint recognition on the audio signal to obtain a recognition result.

The recognition result indicates to wake up the electronic device or not to wake up the electronic device, or indicates that whether to wake up the electronic device is not determined. One of S405 to S407 is performed based on different recognition results.

Specifically, machine sound recognition is used to determine whether the audio signal is a machine sound, or determine whether the audio signal is a human voice. The machine sound may also be referred to as a machine tone, a mechanical sound, an electronic sound, or the like. A specific name and a forming reason are not limited in embodiments of this application. For example, the device plays a voice including a wakeup word to form the machine sound, or the machine sound is formed due to environmental noise or background noise of the device. A user identity may be determined through voiceprint recognition. Machine sound recognition and/or voiceprint recognition are/is performed on the audio signal. This improves accuracy of determining the user identity. The recognition result indicates three results: The electronic device is to be woken up; the electronic device is not to be woken up; or whether to wake up the electronic device is not determined. A determining result that whether to wake up the electronic device is not determined is added. In this way, whether to wake up the electronic device can be further determined subsequently, to improve an accuracy rate of waking up the electronic device.

Optionally, in a first implementation, performing machine sound recognition and/or voiceprint recognition on the audio signal may include:
performing machine sound recognition on the audio signal.

In this implementation, only machine sound recognition is performed on the audio signal. Results of machine sound recognition may include two cases.

Case 1: A result of machine sound recognition includes two types: It is determined that the audio signal is a machine sound, or it is determined that the audio signal is not a machine sound.

If it is determined that the audio signal is a machine sound, the recognition result indicates not to wake up the electronic device, to avoid mistaken wakeup of the electronic device.

If it is determined that the audio signal is not a machine sound, the recognition result indicates to wake up the electronic device or indicates that whether to wake up the electronic device is not determined. In consideration of accuracy of machine sound recognition, when it is determined that the audio signal is not a machine sound, the recognition result may indicate that whether to wake up the electronic device is not determined. Whether to wake up the electronic device may be further determined subsequently, to improve accuracy of waking up the electronic device.

Case 2: A result of machine sound recognition includes three types: It is determined that the audio signal is a machine sound, it is determined that the audio signal is not a machine sound, or it is not determined whether the audio signal is a machine sound.

If it is determined that the audio signal is a machine sound, the recognition result indicates not to wake up the electronic device.

If it is determined that the audio signal is not a machine sound, the recognition result indicates to wake up the electronic device.

If it is not determined whether the audio signal is a machine sound, the recognition result indicates that whether to wake up the electronic device is not determined. Subsequently, whether to wake up the electronic device may be further determined. This improves an accuracy rate of waking up the electronic device.

Optionally, in a second implementation, performing machine sound recognition and/or voiceprint recognition on the audio signal may include:
performing voiceprint recognition on the audio signal.

In this implementation, only voiceprint recognition is performed on the audio signal. A result of voiceprint recognition may include two types: Voiceprint recognition succeeds, or voiceprint recognition fails.

If it is determined that voiceprint recognition succeeds, the recognition result indicates to wake up the electronic device.

If it is determined that voiceprint recognition fails, the recognition result indicates that whether to wake up the electronic device is not determined. Subsequently, whether to wake up the electronic device may be further determined. This improves an accuracy rate of waking up the electronic device.

Optionally, in a third implementation, performing machine sound recognition and/or voiceprint recognition on the audio signal may include:
performing machine sound recognition and voiceprint recognition on the audio signal.

In this implementation, machine sound recognition and voiceprint recognition are performed on the audio signal. The following describes results of machine voice recognition and voiceprint recognition.

Case 1: A result of machine sound recognition includes two types: It is determined that the audio signal is a machine sound, or it is determined that the audio signal is not a machine sound. A result of voiceprint recognition includes two types: Voiceprint recognition succeeds, or voiceprint recognition fails.

If it is determined that the audio signal is a machine sound, the recognition result indicates not to wake up the electronic device.

If it is determined that the audio signal is not a machine sound, and voiceprint recognition succeeds, the recognition result indicates to wake up the electronic device.

If it is determined that the audio signal is not a machine sound, and voiceprint recognition fails, the recognition result indicates that whether to wake up the electronic device is not determined. Subsequently, whether to wake up the electronic device may be further determined. This improves an accuracy rate of waking up the electronic device.

Case 2: A result of machine sound recognition includes three types: It is determined that the audio signal is a machine sound, it is determined that the audio signal is not a machine sound, or it is not determined whether the audio signal is a machine sound. A result of voiceprint recognition includes two types: Voiceprint recognition succeeds, or voiceprint recognition fails.

If it is determined that the audio signal is a machine sound, the recognition result indicates not to wake up the electronic device.

If it is determined that the audio signal is not a machine sound, and voiceprint recognition succeeds, the recognition result indicates to wake up the electronic device.

If it is determined that the audio signal is not a machine sound, and voiceprint recognition fails, the recognition result indicates that whether to wake up the electronic device is not determined.

If it is not determined whether the audio signal is a machine sound, and voiceprint recognition succeeds, the recognition result indicates to wake up the electronic device.

If it is not determined whether the audio signal is a machine sound, and voiceprint recognition fails, the recognition result indicates that whether to wake up the electronic device is not determined.

Optionally, machine sound recognition and voiceprint recognition are performed on the audio signal. In an implementation, machine sound recognition and voiceprint recognition may be performed on the audio signal respectively, and machine sound recognition and voiceprint recognition are independent and non-coupled. An execution sequence of machine voice recognition and voiceprint recognition is not limited in this embodiment. Machine sound recognition and voiceprint recognition may be performed sequentially or simultaneously. For example, machine sound recognition is first performed on the audio signal. If it is determined that the audio signal is not a machine sound, voiceprint recognition is then performed on the audio signal. For another example, voiceprint recognition is first performed on the audio signal, and then machine sound recognition is performed on the audio signal.

Optionally, machine sound recognition and voiceprint recognition are performed on the audio signal. In another implementation, machine sound recognition and voiceprint recognition may be associated with each other, and a coupling manner is used. Usually, an acoustic feature of the audio signal needs to be obtained for machine sound recognition and voiceprint recognition, and coupling between machine sound recognition and voiceprint recognition is implemented through parameter sharing of a neural network model.

Optionally, performing machine sound recognition and voiceprint recognition on the audio signal may include:
inputting the audio signal to a voiceprint identification model to obtain a first result and voiceprint feature information of the audio signal. The identification model is a network model obtained through training by using the acoustic feature of the audio signal as an input and using the first result and the voiceprint feature information of the audio signal as an output. The first result indicates whether the audio signal is a machine sound.

If the first result indicates that the audio signal is not a machine sound, voiceprint recognition is performed on the audio signal based on the voiceprint feature information of the audio signal and a voiceprint template library.

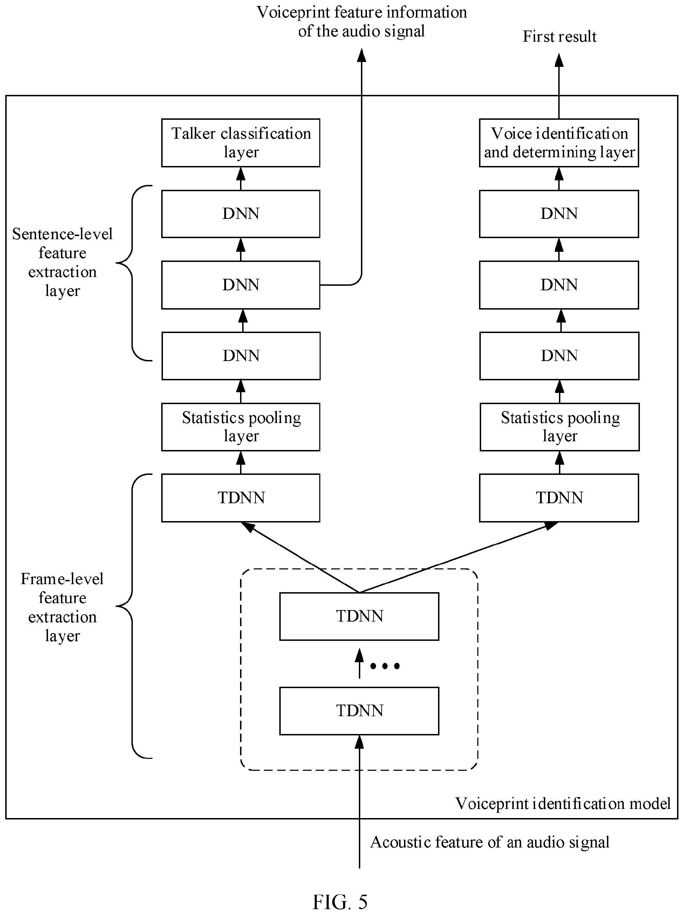

The voiceprint identification model is a pre-trained network model. For example, FIG. 5 is a diagram of a structure of the voiceprint identification model according to an embodiment of this application. As shown in FIG. 5, an input of the voiceprint identification model is an acoustic feature of an audio signal, and an output is a first result and voiceprint feature information of the audio signal. The acoustic feature of the audio signal is a physical quantity that can reflect a feature of the audio signal, for example, may be a Mel-frequency cepstral coefficient (Mel-Frequency Cepstral Coefficient, MFCC) of a preset dimension. Optionally, the preset dimension may be 39 dimensions. The voiceprint identification model shown in FIG. 5 may be understood as including three parts, which are respectively: a voiceprint recognition model on the left side, a voice identification model on the right side, and a common part that is shared by the voiceprint recognition model and the voice identification model and that is located below. The voiceprint recognition model is used to output the voiceprint feature information of the audio signal, and the voice identification model is used to output the first result to indicate whether the audio signal is a machine sound.

The common part may include at least two time delay neural network (Time Delay Neural Network, TDNN) modules. The TDNN modules are also a time delay neural network layer in an x-vector framework. Herein, the x-vector is a mainstream model framework in the field of voiceprint recognition, and may accept an input feature of any length and map the feature to a fixed-length feature expression.

After sharing the TDNN modules with the voice identification model on the right side, the voiceprint recognition model on the left side continues to pass through a TDNN layer that has a same structure but is not shared, to complete feature extraction at a frame level of the audio signal. Then, an output of a frame-level feature extraction layer passes through a statistics pooling layer, to complete feature mapping of the audio signal from the frame level to a sentence level. Then, an output of the statistics pooling layer is input to a sentence-level feature extraction layer. The sentence-level feature extraction layer is formed by deep neural networks (Deep Neural Networks, DNNs). A quantity of DNN layers is not limited in this embodiment. Finally, an output of a penultimate DNN layer is extracted as the voiceprint feature information of the audio signal.

After sharing the TDNN modules with the voiceprint recognition model on the left side, the voice identification model on the right side continues to pass through a TDNN layer that has a same structure but is not shared, to complete feature extraction at a frame level of the audio signal. Then, an output of a frame-level feature extraction layer passes through a statistics pooling layer, to complete feature mapping of the audio signal from the frame level to a sentence level. Then, an output of the statistics pooling layer is input to a sentence-level feature extraction layer to complete feature extraction, and whether the audio signal is a machine sound is determined at a voice identification and determining layer to output the first result.

It can be seen that, in the voiceprint identification model provided in this embodiment, a part of a hidden layer is shared for voiceprint recognition and machine sound recognition, and learning of the two models is controlled in a joint training manner, so that the model is finally converged. In this way, two capabilities of simultaneously extracting the voiceprint information of the audio signal and determining whether the audio signal is a machine sound are achieved.

S405: If the recognition result indicates to wake up the electronic device, wake up the electronic device.

S406: If the recognition result indicates not to wake up the electronic device, skip waking up the electronic device.

S407: If the recognition result indicates that whether to wake up the electronic device is not determined, output prompt information to a user, where the prompt information is used to guide the user to wake up the electronic device.

The prompt information may be in any one of the following forms: an audio, a video, a text, an animation, or a display interface.

The prompt information is output to the user, to implement human-computer interaction with the user and guide the user to determine whether to wake up the electronic device, so as to further determine whether the electronic device is woken up. This avoids a case in which the electronic device is mistakenly woken up or cannot be successfully woken up, and improves the accuracy rate of waking up the electronic device.

Optionally, outputting the prompt information to the user may be directly outputting, by the electronic device, the prompt information to the user. This implements direct interaction between the electronic device and the user.

Optionally, outputting the prompt information to the user may include: transmitting indication information to a first device, where the indication information indicates the first device to output the prompt information to the user. In this implementation, the electronic device may communicate with the first device to transmit the indication information, and the first device outputs the prompt information to the user based on the indication information. The electronic device may implement interaction with the user by using the first device.

A type and a name of the first device are not limited in this embodiment. For example, the first device may be a wearable device, a mobile phone, or a smart large screen, and the wearable device may be a smart watch.

Optionally, a user account of the electronic device is the same as that of the first device. For example, the electronic device is a speaker, and the first device is a mobile phone that has a same user account as that of the speaker. Because the user account of the electronic device is the same as that of the first device, the electronic device is more likely to discover the first device. In this way, interaction with the user can be completed by using the first device to further determine whether to wake up the electronic device.

With reference to FIG. 1A to FIG. 1D, the following describes an effect of using the method for waking up a device provided in this embodiment by the speaker. It is assumed that the speaker performs machine sound recognition and voiceprint recognition on an audio signal.

In the scenario shown in FIG. 1A, the speaker receives the audio signal that is input by the user, and may determine that the audio signal is not a machine sound. Voiceprint recognition succeeds. The recognition result indicates to wake up the electronic device, and the speaker is woken up.

In the scenario shown in FIG. 1B, the speaker receives the audio signal played by the television, and may determine that the audio signal is a machine sound. The recognition result indicates not to wake up the electronic device. This avoids a case in which the speaker is mistakenly woken up.

In the scenario shown in FIG. 1C, the mobile phone plays the recording in which the user says the wakeup word. The speaker receives the audio signal, and may determine that the audio signal is a machine sound. The recognition result indicates not to wake up the electronic device. This avoids a case in which the speaker is mistakenly woken up.

In the scenario shown in FIG. 1D, the speaker receives the audio signal that is input by the user. It is assumed that the speaker determines that the audio signal is not a machine sound, but voiceprint recognition fails. In this case, the recognition result indicates that whether to wake up the electronic device is not determined, and the speaker outputs the prompt information to the user to guide the user to determine whether to wake up the speaker. This improves an accuracy rate of waking up the speaker.

It can be learned that, according to the method for waking up a device provided in this embodiment, machine sound recognition and/or voiceprint recognition are/is performed on the audio signal. This improves accuracy of determining a user identity and avoids mistaken wakeup of the device. In addition, when whether to wake up the electronic device is not determined, the prompt information is output to the user for human-computer interaction with the user. In this way, the user further determines whether to wake up the electronic device. This avoids a case in which the electronic device is mistakenly woken up or cannot be successfully woken up, and improves an accuracy rate of waking up the electronic device.

Optionally, the method for waking up a device provided in this embodiment may further include:
S408: Obtain response information that is input by the user based on the prompt information.

S409: Determine, based on the response information, whether to wake up the electronic device.

The response information may be in any one of the following forms: an audio, a video, a touch operation performed by the user on a display screen, an operation performed by the user on a component on the device, or a body operation of the user, for example, a preset gesture.

It can be learned that, through human-computer interaction between the electronic device and the user, the user determines, by using the response information, whether to wake up the electronic device. In this way, the electronic device finally determines, based on the response information, whether to wake up the electronic device. This improves the accuracy rate of waking up the electronic device.

Optionally, if the electronic device stores a voiceprint template library, the method for waking up a device provided in this embodiment may further include:
if it is determined, based on the response information, to wake up the electronic device, updating the voiceprint template library based on the audio signal.

Specifically, if the electronic device determines, through interaction with the user and based on the response information that is input by the user, to wake up the electronic device, it indicates that the audio signal is used to wake up the electronic device. Therefore, the voiceprint template library is updated based on the audio signal, and voiceprint template information corresponding to the audio signal is added to or updated in the voiceprint template library. In this way, when the user subsequently wakes up the electronic device through a voice, the electronic device can perform voiceprint recognition on an audio signal based on an updated voiceprint template library. This increases a success probability of voiceprint recognition, and improves the accuracy rate of waking up the electronic device.

In addition, according to the method for waking up a device provided in this embodiment, the user does not need to register voiceprint information with electronic device in advance. This simplifies a process of registering a voiceprint by the user.

Details are described below. The voiceprint template library in the electronic device does not have voiceprint template information of a user A. For example, the electronic device is used for the first time after delivery, or the user A has never woken up the electronic device. When the user A wakes up the electronic device, the electronic device receives an audio signal that is input by the user A. It is assumed that the electronic device performs machine sound recognition and voiceprint recognition on the audio signal, determines that the audio signal is not a machine sound, and voiceprint recognition fails. In this case, the electronic device outputs prompt information to the user A, so that the user A further determines whether to wake up the electronic device. The user A inputs response information to the electronic device based on the prompt information. The electronic device determines, based on the response information, to wake up the electronic device, updates the voiceprint template library based on the audio signal that is input by the user A, and adds the voiceprint template information of the user A to the voiceprint template library. In this way, registration of the voiceprint information of the user A is completed, and the user A does not need to register the voiceprint information with the electronic device in advance. Similarly, it is assumed that the electronic device performs only voiceprint recognition on the audio signal, and voiceprint recognition on the audio signal that is input by the user Afails. The electronic device determines, based on response information, to wake up the electronic device, and may update the voiceprint template library based on the audio signal that is input by the user A.

The following describes an implementation of the prompt information and an implementation of outputting, by the electronic device, the prompt information to the user in S407.

Optionally, the prompt information is used to guide the user to perform voice interaction with the electronic device, to determine whether to wake up the electronic device; the prompt information is used to guide the user to perform a preset action in a photographing range of a photographing device on a target device, to determine whether to wake up the electronic device; the prompt information is used to guide the user to perform an operation in a target interface displayed by a target device, to determine whether to wake up the electronic device; or the prompt information is used to guide the user to perform an operation on a target physical button on a target device, to determine whether to wake up the electronic device. The target device may be the electronic device, or a first device that communicates with the electronic device.

Specifically, interaction between the electronic device and the user may be performed in a plurality of forms. For example, voice interaction is performed, or the user performs a preset operation or a preset body action. Content of voice interaction, content in the target interface, a layout of the target interface, and the target physical button are not limited in this embodiment. For example, the electronic device is a speaker, the target device is an electronic device, and the target physical button may be a playing button, a pause button, a "previous" button, a "next" button, or a volume button on the speaker. For another example, the electronic device is a speaker, the target device is a mobile phone that has a same user account as that of the speaker, and the target physical button may be a volume button on the mobile phone.

Interaction between the electronic device and the user in the plurality of forms improves flexibility of further determining, by the user, whether to wake up the electronic device.

The electronic device or the first device may output prompt information to the user. For example, the electronic device is an execution body. Optionally, that the electronic device outputs prompt information to the user may include:
outputting voice prompt information to the user; or
displaying the target interface to the user, where the target interface includes the prompt information.

Optionally, if the prompt information is used to guide the user to perform the preset action in a photographing range of a photographing device on the target device, before response information that is input by the user based on the prompt information is obtained, the method further includes:
starting the photographing device on the electronic device.

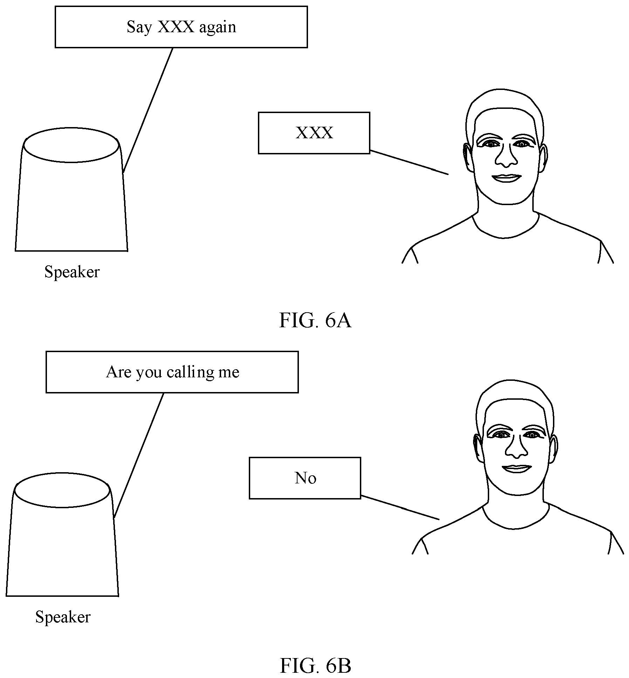

The following uses examples with reference to FIG. 6A to FIG. 6G for description, but FIG. 6A to FIG. 6G do not limit prompt information and an implementation of outputting the prompt information to a user. An electronic device is a speaker, a first device is a mobile phone, and a wakeup word is XXX.

Optionally, in an example, the prompt information is an audio, the speaker outputs the prompt information to the user, response information is also an audio, and the speaker performs voice interaction with the user. For example, as shown in FIG. 6A, the speaker outputs an audio "Say XXX again". Correspondingly, the user determines to wake up the speaker, and says the wakeup word "XXX" to determine that the speaker is to be woken up. For another example, as shown in FIG. 6B, the speaker outputs an audio "Are you calling me?" Correspondingly, the user determines not to wake up the speaker, and may say "no" or not answer to determine that the speaker is not to be woken up.

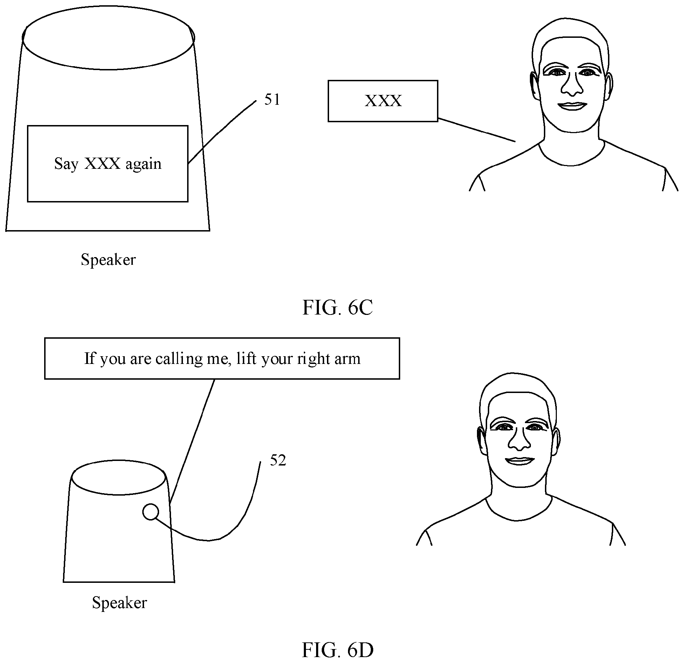

Optionally, in another example, the speaker displays a target interface. The target interface includes prompt information. The prompt information is used to guide the user to perform voice interaction with the electronic device. For example, as shown in FIG. 6C, the speaker displays a target interface 51, and the target interface 51 includes a text "Say XXX again". Correspondingly, the user determines to wake up the speaker, and says the wakeup word "XXX" to determine that the speaker is to be woken up.

Optionally, in still another example, the prompt information is an audio, the speaker outputs the prompt information to the user, and response information is a preset user action. As shown in FIG. 6D, a camera 52 is disposed on the speaker. The speaker outputs an audio "If you are calling me, lift your right arm." Correspondingly, the user determines to wake up the speaker, and may lift the right arm against the camera 52 on the speaker. The camera 52 of the speaker captures an action that the user lifts the right arm, and may determine to wake up the speaker. For another example, an audio output by the speaker may alternatively be "If you are calling me, blink at me".

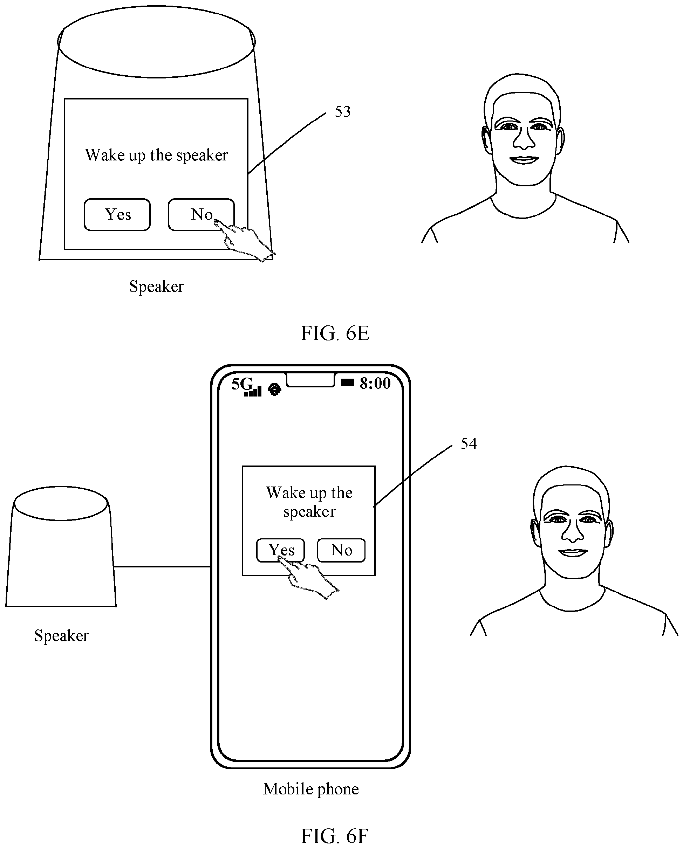

Optionally, in still another example, the speaker displays a target interface. The target interface includes prompt information. The prompt information is used to guide the user to perform an operation in the target interface. As shown in FIG. 6E, the speaker displays a target interface 53, and the target interface 53 includes a text "Wake up the speaker", a "Yes" button, and a "No" button. It is assumed that the user determines not to wake up the speaker. In this case, the user may tap the "No" button to determine that the speaker is not to be woken up.

Optionally, in still another example, the mobile phone displays a target interface. The target interface includes prompt information. The prompt information is used to guide the user to perform an operation in the target interface. As shown in FIG. 6F, the speaker identifies a mobile phone having a same user account in a same area, and the speaker transmits indication information to the mobile phone, to indicate the mobile phone to output prompt information to the user. The mobile phone displays a target interface 54 based on the indication information, and the target interface 54 includes a text "Wake up a speaker", a "Yes" button, and a "No" button. It is assumed that the user determines to wake up the speaker. In this case, the user may tap the "Yes" button to determine that the speaker is to be woken up. Correspondingly, the mobile phone obtains response information that is input by the user based on the prompt information, and transmits the response information to the speaker. The speaker determines, based on the response information, to wake up the speaker.

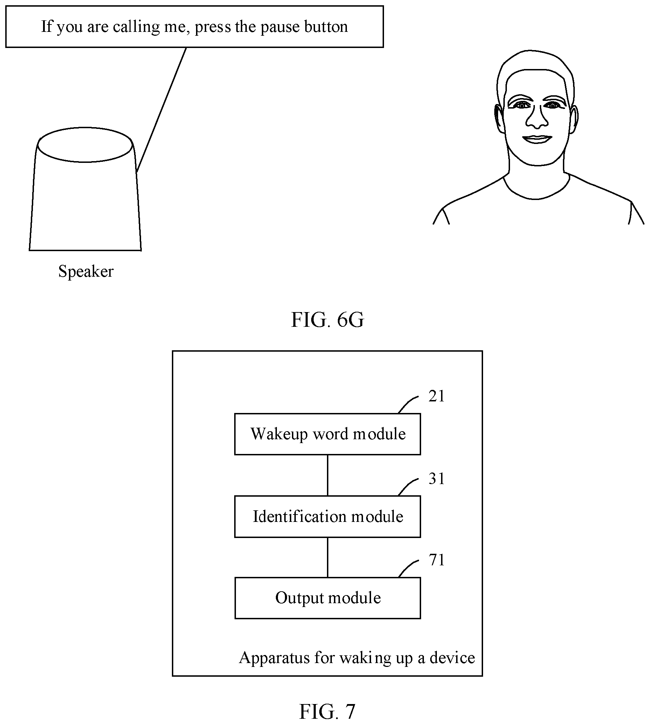

Optionally, in still another example, the prompt information is an audio, and the speaker outputs the prompt information to the user, to guide the user to perform an operation on a target physical button on the electronic device. As shown in Figure 6G, the speaker outputs an audio "If you are calling me, press the pause button." Correspondingly, the user determines to wake up the speaker, and may press the pause button on the speaker.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application with reference to embodiments, but it should not be considered that the implementation goes beyond the scope of this application.

In embodiments of this application, the electronic device may be divided into functional modules based on the foregoing method examples. For example, each functional module corresponding to each function may be obtained through division, or two or more functions may be integrated into one processing module. It should be noted that, in embodiments of this application, module division is an example, and is merely a logical function division. During actual implementation, another division manner may be used. It should be noted that a name of a module in embodiments of this application is an example, and the name of the module is not limited during actual implementation.

For example, FIG. 7 is a diagram of a structure of an apparatus for waking up a device according to an embodiment of this application. Optionally, the apparatus for waking up a device may be applied to an electronic device. As shown in FIG. 7, the apparatus for waking up a device provided in this embodiment may include:
an identification module 31, configured to: when it is determined that a received audio signal includes a wakeup word, perform machine sound recognition and/or voiceprint recognition on the audio signal to obtain a recognition result, where the recognition result indicates to wake up an electronic device or not to wake up an electronic device, or indicates that whether to wake up an electronic device is not determined; and
an output module 71, configured to: if the recognition result indicates that whether to wake up the electronic device is not determined, output prompt information to a user, where the prompt information is used to guide the user to wake up the electronic device.

Optionally, the prompt information is used to guide the user to perform voice interaction with the electronic device, to determine whether to wake up the electronic device;
the prompt information is used to guide the user to perform a preset action in a photographing range of a photographing device on a target device, to determine whether to wake up the electronic device;
the prompt information is used to guide the user to perform an operation in a target interface displayed by a target device, to determine whether to wake up the electronic device; or
the prompt information is used to guide the user to perform an operation on a target physical button on a target device, to determine whether to wake up the electronic device.

Optionally, the target device is the electronic device or a first device that communicates with the electronic device.

Optionally, a user account of the electronic device is the same as that of the first device.

Optionally, the output module 71 is configured to:
output voice prompt information to the user or
display a target interface to the user, where the target interface includes the prompt information.

Optionally, the apparatus further includes a transmission module, configured to:
transmit indication information to the first device, where the indication information indicates the first device to output the prompt information to the user.

Optionally, the first device includes a mobile phone and/or a watch.

Optionally, the identification module 31 is configured to:
perform machine sound recognition and voiceprint recognition on the audio signal.

If it is determined that the audio signal is a machine sound, the recognition result indicates not to wake up the electronic device.

If it is determined that the audio signal is not a machine sound, and voiceprint recognition succeeds, the recognition result indicates to wake up the electronic device.

If it is determined that the audio signal is not a machine sound, and voiceprint recognition fails, the recognition result indicates that whether to wake up the electronic device is not determined.

Optionally, the identification module 31 is configured to:
perform machine sound recognition on the audio signal; and
if it is determined that the audio signal is not a machine sound, perform voiceprint recognition on the audio signal.

Optionally, the identification module 31 is configured to:
input the audio signal to a voiceprint identification model to obtain a first result and voiceprint feature information of the audio signal, where the first result indicates whether the audio signal is a machine sound; and
if the first result indicates that the audio signal is not a machine sound, perform voiceprint recognition on the audio signal based on the voiceprint feature information of the audio signal and a voiceprint template library.

Optionally, the identification module 31 is configured to:
perform machine sound recognition on the audio signal.

If it is determined that the audio signal is a machine sound, the recognition result indicates not to wake up the electronic device.

If it is determined that the audio signal is not a machine sound, the recognition result indicates to wake up the electronic device.

If it is not determined whether the audio signal is a machine sound, the recognition result indicates that whether to wake up the electronic device is not determined.

Optionally, the identification module 31 is configured to:
perform voiceprint recognition on the audio signal.

If it is determined that voiceprint recognition succeeds, the recognition result indicates to wake up the electronic device.

If it is determined that voiceprint recognition fails, the recognition result indicates that whether to wake up the electronic device is not determined.

Optionally, the apparatus further includes a determining module. The determining module is configured to:
obtain response information that is input by the user based on the prompt information; and
determine, based on the response information, whether to wake up the electronic device.

Optionally, the prompt information is used to guide the user to perform the preset action in the photographing range of the photographing device on the target device. The determining module is further configured to:
before the response information that is input by the user based on the prompt information is obtained, start the photographing device on the electronic device.

Optionally, the electronic device stores the voiceprint template library, and the apparatus further includes an update module. The update module is configured to:
if it is determined, based on the response information, to wake up the electronic device, update the voiceprint template library based on the audio signal.

Optionally, the apparatus further includes a wakeup word module 21. The wakeup word module 21 is configured to:
obtain the audio signal, and determine whether the audio signal includes the wakeup word.

The apparatus for waking up a device provided in this embodiment is configured to perform the method for waking up a device provided in method embodiments of this application. The technical principles and technical effects are similar, and details are not described herein again.

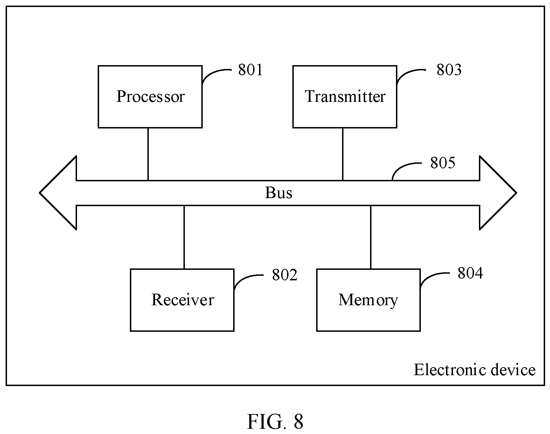

FIG. 8 shows another structure of the electronic device according to an embodiment of this application. The electronic device includes a processor 801, a receiver 802, a transmitter 803, a memory 804, and a bus 805. The processor 801 includes one or more processing cores. The processor 801 runs a software program and a module to perform various functional applications and information processing. The memory 804 may be configured to store at least one program instruction, and the processor 801 is configured to execute the at least one program instruction, to implement the technical solutions in the foregoing embodiments. The receiver 802 and the transmitter 803 may be implemented as a communication component, and the communication component may be a baseband chip. The memory 804 is connected to the processor 801 through the bus 805. The implementation principles and technical effects thereof are similar to those of the foregoing method-related embodiments, and details are not described herein again.

Persons skilled in the art may understand that, for ease of description, FIG. 8 shows only one memory and one processor. In an actual electronic device, there may be a plurality of processors and memories. The memory may also be referred to as a storage medium, a storage device, or the like. This is not limited in embodiments of this application.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be configured to carry or store expected program code in a form of instruction structure or data structure and that can be accessed by a computer, but is not limited thereto.

The memory in embodiments of this application may alternatively be a circuit or any other apparatus that can implement a storage function, and is configured to store program instructions and/or data. All or a part of the method provided in embodiments of this application may be implemented by using software, hardware, firmware, or any combination thereof. When software is used to implement the method, all or a part of the method may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, a piece of user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on a device, the device is enabled to perform the technical solutions in the foregoing embodiments. The implementation principles and technical effects thereof are similar to those of the foregoing related embodiments, and details are not described herein again.

An embodiment of this application provides a computer-readable storage medium. The computer-readable storage medium stores program instructions. When the program instructions are executed by a device, the device is enabled to perform the technical solutions in the foregoing embodiments. The implementation principles and technical effects thereof are similar to those of the foregoing related embodiments, and details are not described herein again.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for waking up a device, comprising:
when it is determined that a received audio signal comprises a wakeup word, performing machine sound recognition and/or voiceprint recognition on the audio signal to obtain a recognition result, wherein the recognition result indicates to wake up an electronic device or not to wake up an electronic device, or indicates that whether to wake up an electronic device is not determined; and
if the recognition result indicates that whether to wake up the electronic device is not determined, outputting prompt information to a user, wherein the prompt information is used to guide the user to wake up the electronic device.

2. The method according to claim 1, wherein
the prompt information is used to guide the user to perform voice interaction with the electronic device, to determine whether to wake up the electronic device;
the prompt information is used to guide the user to perform a preset action in a photographing range of a photographing device on a target device, to determine whether to wake up the electronic device;
the prompt information is used to guide the user to perform an operation in a target interface displayed by a target device, to determine whether to wake up the electronic device; or
the prompt information is used to guide the user to perform an operation on a target physical button on a target device, to determine whether to wake up the electronic device.

3. The method according to claim 2, wherein the target device is the electronic device or a first device communicating with the electronic device.

4. The method according to claim 3, wherein a user account of the electronic device is the same as that of the first device.

5. The method according to claim 1, wherein the outputting prompt information to a user comprises:
outputting voice prompt information to the user; or
displaying a target interface to the user, wherein the target interface comprises the prompt information.

6. The method according to claim 1, wherein the outputting prompt information to a user comprises:
transmitting indication information to a first device, wherein the indication information indicates the first device to output the prompt information to the user.

7. The method according to claim 3, 4, or 6, wherein the first device comprises a mobile phone and/or a watch.

8. The method according to any one of claims 1 to 7, wherein the performing machine sound recognition and/or voiceprint recognition on the audio signal to obtain a recognition result comprises:
performing machine sound recognition and voiceprint recognition on the audio signal, wherein
if it is determined that the audio signal is a machine sound, the recognition result indicates not to wake up the electronic device;
if it is determined that the audio signal is not a machine sound, and voiceprint recognition succeeds, the recognition result indicates to wake up the electronic device; or
if it is determined that the audio signal is not a machine sound, and voiceprint recognition fails, the recognition result indicates that whether to wake up the electronic device is not determined.

9. The method according to claim 8, wherein the performing machine sound recognition and voiceprint recognition on the audio signal comprises:
performing machine sound recognition on the audio signal; and
if it is determined that the audio signal is not a machine sound, performing voiceprint recognition on the audio signal.

10. The method according to claim 8, wherein the performing machine sound recognition and voiceprint recognition on the audio signal comprises:
inputting the audio signal to a voiceprint identification model to obtain a first result and voiceprint feature information of the audio signal, wherein the first result indicates whether the audio signal is a machine sound; and
if the first result indicates that the audio signal is not a machine sound, performing voiceprint recognition on the audio signal based on the voiceprint feature information of the audio signal and a voiceprint template library.

11. The method according to any one of claims 1 to 7, wherein the performing machine sound recognition and/or voiceprint recognition on the audio signal to obtain a recognition result comprises:
performing machine sound recognition on the audio signal, wherein
if it is determined that the audio signal is a machine sound, the recognition result indicates not to wake up the electronic device;
if it is determined that the audio signal is not a machine sound, the recognition result indicates to wake up the electronic device; or
if it is not determined whether the audio signal is a machine sound, the recognition result indicates that whether to wake up the electronic device is not determined.

12. The method according to any one of claims 1 to 7, wherein the performing machine sound recognition and/or voiceprint recognition on the audio signal to obtain a recognition result comprises:
performing voiceprint recognition on the audio signal, wherein
if it is determined that voiceprint recognition succeeds, the recognition result indicates to wake up the electronic device; or
if it is determined that voiceprint recognition fails, the recognition result indicates that whether to wake up the electronic device is not determined.

13. The method according to any one of claims 1 to 12, wherein the method further comprises:
obtaining response information that is input by the user based on the prompt information; and
determining, based on the response information, whether to wake up the electronic device.

14. The method according to claim 13, wherein the prompt information is used to guide the user to perform the preset action in the photographing range of the photographing device on the target device, and before the obtaining response information that is input by the user based on the prompt information, the method further comprises:
starting the photographing device on the electronic device.

15. The method according to claim 13, wherein the electronic device stores the voiceprint template library, and the method further comprises:
if it is determined, based on the response information, to wake up the electronic device, updating the voiceprint template library based on the audio signal.

16. An electronic device, comprising a processor, wherein the processor is configured to: be coupled to a memory, read instructions in the memory, and enable, according to the instructions, the electronic device to perform the method according to any one of claims 1 to 15.

17. A computer-readable storage medium, wherein the computer-readable storage medium stores computer instructions, and when the computer instructions are run on a device, the device is enabled to perform the method according to any one of claims 1 to 15.
